# EUROPEAN PATENT SPECIFICATION

(11) **EP 3 538 913 B1**
(45) Date of publication and mention of the grant of the patent: **19.08.2020**
(21) Application number: 17829734.7
(22) Date of filing: 30.10.2017
(51) Int. Cl.: G01S 5/16, F41G 3/26

(54) **SYSTEM FOR RECOGNISING THE POSITION AND ORIENTATION OF AN OBJECT IN A TRAINING RANGE**
SYSTEM ZUR ERKENNUNG DER POSITION UND AUSRICHTUNG EINES OBJEKTS IN EINEM TRAININGSBEREICH
SYSTÈME DE RECONNAISSANCE DE LA POSITION ET DE L'ORIENTATION D'UN OBJET DANS UN CHAMP DE TIR D'ENTRAÎNEMENT

(30) Priority: 08.11.2016 SI 201600275
(43) Date of publication of application: 18.09.2019
(73) Proprietor: Panna Plus d.o.o., 1000 Ljubljana (SI)
(72) Inventor: PETERCA, Primoz, 1000 Ljubljana (SI)
(74) Representative: Jersan, Tatjana
(86) International application number: PCT/SI2017/050001
(87) International publication number: WO 2018/088968

(56) References cited:
- FR-A1- 2 878 615
- US-A- 5 215 464
- US-A1- 2007 166 669
- US-A1- 2009 081 619

## Description

This invention relates to the system for recognising the position and orientation of a moving object on a training range, where the position and orientation of the moving object are recognized with the help of statically positioned point sources of electromagnetic waves of specific band B wavelength that have a wide angle of radiation into the area and are arranged a specific distance from one another in the training range, as well as a dynamic camera positioned on a moving object that can detect electromagnetic waves in the band B wavelength area. The system also includes a computer that gives real-time information on the position and orientation of the object in the training range via an appropriate module. More specifically, the invention relates to army training ranges and provides information on the global position of the object in the training range and information on the position and direction of the aiming weapon in real-time. The object inside the training range can represent a trainee who has a weapon on which the camera is mounted in such a way that it is facing the same direction as the weapon.

The use of GPS transmitters for determining the position of moving objects is well known in prior art. The use of such systems is limited by the ability to receive GPS signals. The systems can also use lasers to determine the position of a trainee or object in the area. Training ranges that use lasers, meaning that the trainee has a weapon with an attached laser, allow only limited monitoring of shot accuracy, primarily on flat surfaces. It is not possible to easily measure the accuracy of a shot on a curved surface. A target or target's surrounding area detects only where the laser is pointed and the moment of the trigger-pull, it cannot monitor or detect movement or the position of a trainee/weapon, thus the position of the trainees in such systems is poorly determined and unknown in both the real world and consequently in the virtual world.

In US Patent Number 5,215,464, an interactive simulator for training hand-to-hand combat for soldiers is introduced. The simulator includes a flat projection screen on which the environment and active video targets (aggressors) are projected. Each trainee has a weapon that is equipped with a collimated source of infrared (IR) light, which when triggered emits a small IR spot that is detected by an IR spot tracker and thus determines the x and y position coordinates of the individual weapon, corresponding to the projection screen, and sends the position coordinates to the computer. The computer compares the position coordinates with the pre-entered position coordinates of an individual active target on a screen at the moment the trainee pulled the trigger. If the position coordinates match, it means that the trainee hit the active target, which is then removed from the screen. The simulator also enables a simulation of an aggressor shooting back. For this purpose, an array of infrared-emitting diodes is positioned above the video projection screen, which covers the whole training space and is randomly triggered and thus simulates the aggressor's shots. Each trainee has a detector placed on their torso vest, which detects the light from individual IR diodes from the set. If the torso vest detector detects IR light, it means that the aggressor's shot has hit the trainee and the trainee's weapon is deactivated. There are prior art systems that determine the position of objects in space with the use of light sources that disperse light. In US patent no. 5,227,985, a computer vision system is introduced that monitors the orientation and position of an object in space using one static camera and at least four LEDs, which are mounted on the surface of the moving object in a non-coplanar arrangement. The system introduced in this patent is also spatially limited, as the space in which the object can move and in which the camera can detect it is limited by the camera's angle of capturing images.

In US application No. US 2007/166667 a perspective tracking system for determining a point-of-aim of a gun in a three-dimensional space is disclosed. The system comprises at least one statically positioned positional field (TPA) comprising four infrared LEDs (102 -105). A camera (PTD) mounted in the weapon identifies each emitter, determines its physical spatial relationship to other emitters and computes a solution for perspective based on each emitter's location in the captured image field. Solution of position and perspective may be derived from the viewed positional filed emitter relationships. The position and orientation of an object is calculated based on the distances and angles between the point sources (102 - 105) on a two-dimensional image captured by the camera (PTD) and pre-entered data about the position of the positional fields (TPA) and the point sources within the TPA.

The listed shortcomings are solved by the system defined by independent claim 1. Embodiments of the invention are claimed in the dependent claims.

The system according to the invention relates to a training range that includes at least one statically positioned positional field of point sources of electromagnetic waves (EM waves) of specific band B wavelength, at least one camera mounted on a moving object that can detect electromagnetic waves in the area of wavelength B, or that can detect the sources of such waves with specific accuracy, and a computer system connected to the camera.

The individual positional field contains at least four point sources of EM waves, which are arranged within the field in a non-coplanar arrangement. If more positional fields are used, all the positional fields have the same architecture, meaning that each individual point source is always equally distant in directions x, y and z from the centre of the positional field, thus all positional fields have the same arrangement of point sources of EM waves in directions x, y and z and from the local coordinate system of the positional field. As all the positional fields are identical, the camera on the moving object recognizes the position and orientation of the object or enables the correct recognition of the relative position of the object; however, it cannot recognize the absolute position of the object on the training range with regard to the positional fields. In order to additionally enable the recognition of the absolute position of the object on a training range when more positional fields are used, the system adds an additional positional field, which is integrated as an additional point source of EM waves within or in the direct proximity of each positional field, so that when combined with one or more point sources for each positional field, they form a unique parameter (e.g. an angle or distance) that visually differentiates the specific positional field from the other positional fields in the training range. When the system includes two or more positional fields, the system additionally includes at least one additional positional field with at least one point source of EM waves, while the additional point sources within the additional positional field form a unique pattern of point sources of EM waves independently or in combination with the point sources of a nearby positional field.

Wavelength band B is in the infrared (IR) spectrum, which does not coincide with the spectrum of visible light and consequently, does not disturb the trainee when observing the environment or screen; furthermore, the camera is not disturbed by any light from the surrounding area. The point sources of electromagnetic radiation are point sources of IR radiation and this embodiment of the invention can use IR diodes with a normal radiation angle of 120 on all sides in the surrounding area.

The camera is mounted on a moving object, which in this preferred embodiment is a training weapon, in such a way that it is pointed in the same direction as the weapon and detects band B EM waves, which are being transmitted by the point sources of the positional fields. The camera can have a frequency filter so that it only detects band B, which is transmitted by the point sources, and a cutoff filter so that it only detects strong signals from the point sources and background signals, e.g. radiation from the surrounding area or nearby objects, do not disturb the captured image. The camera must enable a sufficiently fast detection of the signals transmitted by the point sources of positional fields and additional positional fields so that the system can recognize the position and orientation of a moving object/trainee/weapon on the training range in real-time. In the preferred embodiment, the camera is an IR camera with an IR frequency filter so that the image or frame captured by the camera is of white spots on a black background. In the preferred embodiment, the camera samples 100 frames per second, while the calculation for the position and orientation is executed for every frame.

In one of the embodiments, a training range could be bounded on one side, preferably on more sides, or even more preferably on all sides with one or more screens on which the training scenarios are displayed either statically or dynamically (backgrounds and possible targets), while the positional fields and additional positional fields are positioned on the edges of the screens. Positional fields inside the training range are placed at specific distances from each other so that the camera can always detect at least one positional field from the point sources of EM waves; in the case of more positional fields, it detects at least one positional field and at least one additional positional field. Individual training scenarios are executed in the computer system as software training modules of scenarios within the coordination system of the training range. Scenarios can be chosen and can be interactive so that the trainee's activity (e.g. position and shots) impacts the course of the scenario.

The working area of a training range, the surface on which the object/trainee with a weapon can move and the directions in which the trainee can point the training weapon are limited, as the camera on the object must always "see" (that is, detect) at least one positional field from point sources of EM waves - and in the case of more positional fields, at least one positional field and one additional positional field. In order to achieve this, a certain distance is required between the camera and the positional fields and additional positional fields or screen. The boundaries of the training range's working area and training corners depend on the angle at which the camera captures images, the radiation angle of the point sources of EM waves, the number of positional fields and/or additional fields and the distance between them. An additional limitation of a training range's working area can be caused by a greater distance between the camera and the point sources of EM waves, where they are not clearly visible or can appear so close together that they cannot be differentiated. A solution for this particular limitation is to arrange the point sources of the EM waves further apart within an individual positional field or an additional positional field.

The computer system connected to the camera consists of
- a software module of the test ground's coordinate system with pre-entered data on the dimensions of the training range and the positions of the positional fields, additional positional fields, as well as the point sources within the individual positional fields and additional positional fields,
- a module for calculating the position and orientation of an object in the coordinate system of the training range, based on the distances and angles between the point sources in the positional fields and additional positional fields on a two-dimensional image captured by the camera and using pre-entered data on the position of the positional fields and/or additional positional fields, as well as the positions of point sources within every positional field and/or additional positional field. The module uses well-known mathematical methods to, on the basis of known data about the positions of the positional fields' point sources and additional positional fields' point sources in the coordinate system of the training range and a two-dimensional image of at least one whole positional field and one additional positional field if there are more positional fields captured by the camera (that is, the distances between the point sources and the angles between them), calculate the object's position in the coordinate system of the training range and the orientation of the object/weapon (the direction the weapon is pointed), wherein the orientation is expressed in the form of a quaternion or a rotation matrix. Well-known mathematical methods, such as the Jacobian matrix and Gaussian smoothing, are used for calculating the position and orientation.

Additionally, the computer system enables starting and choosing between different weapon software modules, which contain data on an individual weapon, e.g. the range, number of shots in the clip, ballistic data etc.

Additionally, the computer system can turn on a memory module, which enables the recording and storage of a specific training session - the training scenario, the trainee's movement and activity for a replay and/or analysis.

Additionally, the invented system enables the integration of a weapon trigger; the trigger is connected to the computer system. The system includes a trigger sensor mounted on the weapon's trigger, which detects the trigger-pull moment and is connected to the computer system, which consequently enables the calculation of bullet trajectory and information about targets that were hit in the training scenario.

The invented system additionally provides a display for an instructor, which is connected to the computer system and allows the instructor to simultaneously (or later) monitor the training.

Additionally, the invented system enables the use of a user interface, which is connected to the computer system and enables interaction with the computer system, e.g. loading different modules, control of the course of the scenario during training by the instructor, etc.

The invention will further be described with an embodiment and presented with figures showing:
Figure 1: the training range (from a birds' eye view) with positional fields and projectors. The positional fields are placed on the internal side of the screen; the limit of the trainees' movement is also visible.
Figure 2: View from inside the training range (central perspective). One part of the training range is visible, where the camera on the weapon can see more positional fields and additional positional fields; information on the position and orientation is sent to the central computer.
Figure 3: Possible position of individual point sources of IR radiation in a positional field with an additional positional field, which is integrated as a series of point sources of IR radiation in the middle of the positional field and is orientated at a unique angle in each of the positional fields.

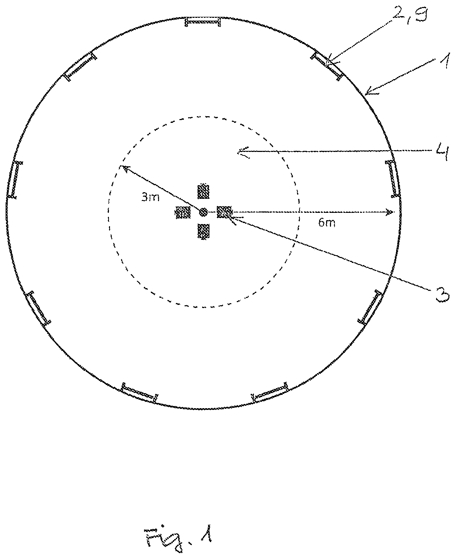

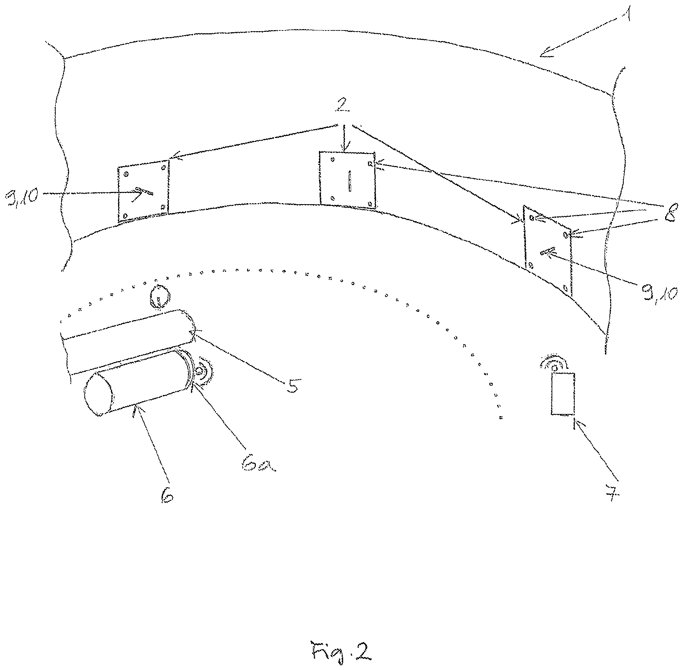

In this embodiment, the point sources of EM radiation are point sources of IR radiation. In this embodiment, in figure 1 and 2, the training range is made from an aluminium frame so that the range has a cylindrical shape with an inner radius of 6m, so the trainee (the moving object) can freely move in a circle with a radius of 3m, which represents the working area of training range 4. Screen 1 is mounted on the aluminium frame. Above the centre of the training range, an adequate number of projectors 3 are placed to project a virtual environment, meaning that they display static and dynamic simulations on the screen 1. The number of projectors 3 depends on the size of the training range's radius, meaning the projection cylinder, as the quality of the picture is achieved by using a method to cover and smooth the edges in relation to the curve of the screen 1. Screen 1 is placed on the edges of the training range, therefore on the inner curved surface of the cylinder, beside the edges of the screen 1, positional fields 2 are placed, as well as additional positional fields 9. In this embodiment, the moving object is the weapon 5, which the trainee carries in their hand, and a camera 6 with a processing software unit 6a is mounted on the weapon. It communicates with the central computer 7 at all times and sends information about the weapon's (camera's) position and orientation in the working area of the training range. In this embodiment, the computer system consists of the processing software unit 6a and the central computer 7, wherein processing software unit 6a continually calculates the position and orientation of the weapon 5 within the coordinate system of the training range, based on the distances and angles between the point sources of IR radiation 8, 10 in the positional fields 2 and additional positional fields 9 on a two-dimensional image (as is captured by the camera 6) and pre-entered data about the positions of the positional fields 2 and additional positional fields 9 and about the positions of the point sources of IR radiation 8, 10 within every positional field 2 and additional positional field 9, then sends the information to the central computer 7.

The trigger on the weapon 5 is connected to the central computer 7, which, from the moment of trigger-pull and from the calculated position and orientation of the weapon 5, which is transmitted by the camera 6 through processor software unit 6a, acquires the information about the position and orientation of the triggered weapon 5.

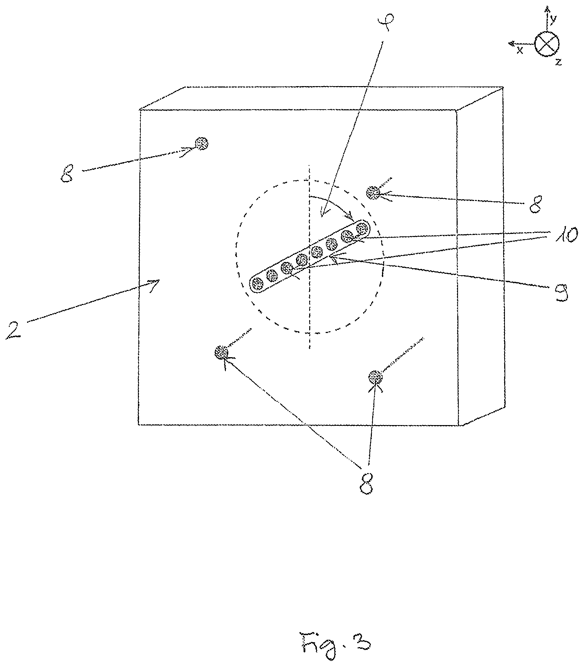

An individual positional field 2, which is shown in figure 3, includes an additional positional field 9. Each individual positional field 2 has four point sources 8 of IR radiation arranged in a non-coplanar way; however, they are spaced differently, with the help of spacers, pointing in directions x, y and z in the local coordinate system of the individual positional field 2. The arrangement of the individual point sources 8 of IR radiation is the same in all the positional fields 2, meaning that they are arranged in the same way in directions x, y and z in the local coordinate system of the individual positional field 2. Within the positional field 2, an additional positional field 9 is implemented, which is arranged as a series of point sources 10 of IR radiation. The point sources 10 of IR radiation are implemented on a line, which is in the plains x, y shifted by the angle ϕ with regard to the vertical. The angle ϕ is unique in each positional field 2, which means that each individual positional field 2 in the training range can be distinguished from one another and the visual differentiation of a specific positional field 2 from the other positional fields 2 in the training range is possible.

## Claims

1. A system for recognising the position and orientation of an object (5) in a training range, which consists of:
- at least two statically positioned positional fields (2) of point sources of electromagnetic waves of the specific band B wavelength, each of said positional fields (2) consisting of at least four point sources (8) of electromagnetic waves arranged within the each of the positional fields (2) in a non-coplanar way, wherein said positional fields (2) have the same arrangement of point sources (8) of EM waves in directions x, y and z of a local positional field's (2) coordinate system;
- additional positional fields (9) placed within the positional fields (2), wherein to each positional field (2) one additional positional field (9) belongs and wherein each of said additional positional fields (9) is implemented as a series of point sources (10) of EM waves on the same line in planes x and y of the local positional field's (2) coordinate system, wherein the line of point sources (10) of EM waves in each positional field (2) is at a unique angle ϕ with regard to the vertical in plains x and y of the local coordinate system;
- at least one camera (6), which is mounted on a moving object (5) and which can detect electromagnetic waves in the band B wavelength,
- at least one computer system, which is connected to the camera (6) and includes
- a software module of the training range's coordinate system with pre-entered data on the dimensions of the training ground, the positions of the positional fields (2), the positions of the point sources (8) of the EM waves within the positional fields (2), the positions of the additional positional fields (9) and the positions of the additional point sources (10) of EM waves in each additional positional field (9);
- a software module for calculating the position and orientation of an object (5) in the coordinate system of the training range, based on the distances and angles between the point sources (8, 10) of EM waves in the positional fields (2) and additional positional fields (9) using the two-dimensional image captured by the camera (6) and pre-entered data on the position of the positional fields (2), additional positional fields (9) and on the positions of the point sources (8, 10) of EM waves within every positional field (2) and additional positional fields (9).

2. The system of claim 1, wherein the training range is bordered on one side, preferably on more sides, and even more preferably on all sides with one or more screens (1), on which training scenarios are displayed either statically or dynamically, displaying background and possible targets, while the positional fields (2) and additional positional fields (9) are placed on the edges of the screens (1) and the positional fields (2) within the training range are placed at specific distances from each other so that the camera (6) always detects at least one positional field (2) of point sources (8) of EM waves or, in the case of several positional fields (2), the camera (6) detects the point sources (8) of at least one positional field (2) and the point sources (10) of EM waves of at least one additional positional field (9).

3. The system of the previous claims, wherein the EM waves of band B wavelength are in the IR spectrum and the point sources (8, 10) of the EM waves are point sources of infrared (IR) radiation, preferably an IR diode.

4. The system of the previous claims, wherein the computer system additionally enables starting and choosing between different weapon software modules containing data on an individual weapon, such as range, ballistic information and number of bullets in a clip.

5. The system of the previous claims, wherein the computer system additionally enables starting and choosing between different training scenario software modules containing information on the surroundings, terrain, number, shape, distance and other information on targets and other objects in the training scenario, as well as the course of a training scenario, which is displayed on screens (1) and allows interaction between the training scenario and the object's activity (5).

6. The system of the previous claims, wherein the system includes a user interface connected to a computer system and enables interaction with the computer system, meaning loading different modules, the instructor's ability to affect the course of the training scenario during the training itself; and a display for instructor connected to the computer system, which enables the instructor to simultaneously or later monitor the training or affect the course of the training scenario.

7. The system of the previous claims, wherein the computer system additionally includes a memory module that records and stores information on the course of a specific training session meaning the training scenario, the trainee's movement and activity for a replay and/or analysis.

8. The system of the previous claims, wherein the computer system consists of a process software unit (6a) and a central computer (7), wherein the process software unit (6a) is connected to the camera (6) and the central computer (7) and is preferably mounted beside the camera (6) on the object (5), wherein the process software unit (6a) executes the software module for calculating the position and orientation of the object (5) in the training range's coordinate system, wherein the central computer executes other software modules and functionalities of the computer system.

9. The system of the previous claims, wherein the training range is a military training ground and the object (5) is a firearm, which is handled by a trainee, wherein the camera (6) is mounted on the firearm's (5) barrel facing the direction of the aim.

10. The system of the previous claims, wherein it includes the trigger sensor mounted on the firearm's (5) trigger that detects the trigger-pull moment and is connected to the computer system, which consequently enables the calculation of trajectory and provides information on target hits in the training scenario.

11. A military training range, wherein it includes the system of claims from 1 to 10.

## Patentansprüche

1. System zur Erkennung der Position und Ausrichtung eines Objekts (5) in einem Trainingsbereich bestehend aus:
- mindestens zwei statisch positionierten Positionsfeldern (2) aus Punktquellen elektromagnetischer Wellen der spezifischen Band-B-Wellenlänge, wobei jedes der Positionsfelder (2) aus mindestens vier Punktquellen (8) elektromagnetischer Wellen besteht, die innerhalb eines jeden der Positionsfelder (2) nicht koplanar angeordnet sind, wobei die Positionsfelder (2) die gleiche Anordnung von Punktquellen (8) von EM-Wellen in Richtungen x, y und z eines lokalen Positionsfeld-Koordinatensystems (2) aufweisen;
- weiteren Positionsfeldern (9), wobei jedem Positionsfeld (2) ein weiteres Positionsfeld (9) zugehörig ist und wobei jedes der weiteren Positionsfelder (9) als eine Reihe von Punktquellen (10) von EM-Wellen auf derselben Linie in Ebenen x und y des lokalen Positionsfeld-Koordinatensystems implementiert ist, wobei die Linie von Punktquellen (10) von EM-Wellen in jedem Positionsfeld (2) unter einem eindeutigen Winkel ϕ in Bezug auf die Vertikale in den Ebenen x und y des lokalen Koordinatensystems steht;
- mindestens einer Kamera (6), die an einem beweglichen Objekt (5) angebracht ist und die elektromagnetische Wellen in der Band-B-Wellenlänge erfassen kann,
- mindestens einem Computersystem, das mit der Kamera (6) verbunden ist und das Folgendes umfasst
- ein Softwaremodul des Trainingsbereichskoordinatensystems mit voreingegebenen Daten über die Abmessungen des Trainingsbodens, die Positionen der Positionsfelder (2), die Positionen der Punktquellen (8) der EM-Wellen innerhalb der Positionsfelder (2), die Positionen der zusätzlichen Positionsfelder (9) und die Positionen der zusätzlichen Punktquellen (10) von EM-Wellen in jedem zusätzlichen Positionsfeld (9);
- ein Softwaremodul zum Berechnen der Position und Orientierung eines Objekts (5) im Koordinatensystem des Trainingsbereichs, basierend auf den Abständen und Winkeln zwischen den Punktquellen (8, 10) von EM-Wellen in den Positionsfeldern (2) und zusätzlichen Positionsfeldern (9) unter Verwendung des von der Kamera (6) erfassten zweidimensionalen Bildes und von voreingegebenen Daten über die Position der Positionsfelder (2), von weiteren Positionsfeldern (9) und von den Positionen der Punktquellen (8, 10) von EM-Wellen innerhalb jedes Positionsfeldes (2) und weiterer Positionsfelder (9).

2. System nach Anspruch 1, wobei der Trainingsbereich auf einer Seite, vorzugsweise an mehreren Seiten, und mehr bevorzugt an allen Seiten mit einem oder mehreren Bildschirmen (1) begrenzt ist, auf denen Trainingsszenarien entweder statisch oder dynamisch dargestellt werden, der Hintergrund und mögliche Ziele werden angezeigt, während die Positionsfelder (2) und weitere Positionsfelder (9) auf die Ränder der Bildschirme (1) gelegt werden und die Positionsfelder (2) innerhalb des Trainingsbereichs in bestimmten Abständen zueinander angeordnet werden, so dass die Kamera (6) stets mindestens ein Positionsfeld (2) von Punktquellen (8) von EM-Wellen erfasst oder im Falle mehrerer Positionsfelder (2) die Kamera (6) die Punktquellen (8) mindestens eines Positionsfeldes (2) und die Punktquellen (10) von EM-Wellen mindestens eines weiteren Positionsfeldes (9) erfasst.

3. System nach den vorhergehenden Ansprüchen, wobei die EM-Wellen der Band-B-Wellenlänge im IR-Spektrum liegen und die Punktquellen (8, 10) der EM-Wellen Punktquellen von Infrarot (IR)-Strahlung sind, vorzugsweise eine IR-Diode.

4. System nach den vorhergehenden Ansprüchen, wobei das Computersystem zusätzlich das Starten und die Auswahl aus den verschiedenen Waffensoftwaremodulen ermöglicht, die Daten auf einer einzelnen Waffe enthalten, wie Bereich, ballistische Information und Anzahl von Geschossen in einem Magazin.

5. System nach den vorhergehenden Ansprüchen, wobei das Computersystem zusätzlich das Starten und Wählen zwischen verschiedenen Trainingsszenariosoftwaremodulen ermöglicht, die Informationen über die Umgebung, das Gelände, die Anzahl, die Form, den Abstand und andere Informationen über Ziele und andere Objekte im Trainingsszenario enthalten, sowie den Verlauf eines Trainingsszenarios, das auf Bildschirmen (1) dargestellt wird und eine Interaktion zwischen dem Trainingsszenario und der Aktivität des Objekts (5) ermöglicht.

6. System nach den vorhergehenden Ansprüchen, wobei das System eine Benutzerschnittstelle umfasst, die mit einem Computersystem verbunden ist und die Interaktion mit dem Computersystem ermöglicht, was das Laden verschiedener Module bedeutet, die Fähigkeit des Instruktors, den Verlauf des Trainingsszenarios während des Trainings selbst zu beeinflussen; und eine Anzeige für den Instruktor, die mit dem Computersystem verbunden ist, die es dem Instruktor ermöglicht, das Training zeitgleich oder später zu überwachen oder den Verlauf des Trainingsszenarios zu beeinflussen.

7. System nach den vorhergehenden Ansprüchen, wobei das Computersystem des Weiteren ein Speichermodul umfasst, das Informationen über den Verlauf einer bestimmten Trainingssitzung erfasst und speichert, was das Trainingsszenario, die Bewegung und Aktivität des Übenden für eine Wiedergabe und/oder Analyse bedeutet.

8. System nach den vorhergehenden Ansprüchen, wobei das Computersystem aus einer Prozesssoftwareeinheit (6a) und einem Zentralrechner (7) besteht, wobei die Prozesssoftwareeinheit (6a) mit der Kamera (6) und dem Zentralrechner (7) verbunden ist und vorzugsweise neben der Kamera (6) auf dem Objekt (5) angebracht ist, wobei die Prozesssoftwareeinheit (6a) das Softwaremodul zur Berechnung der Position und Orientierung des Objekts (5) im Koordinatensystem des Trainingsbereichs ausführt, wobei der Zentralrechner weitere Softwaremodule und Funktionalitäten des Computersystems ausführt.

9. System nach den vorhergehenden Ansprüchen, wobei der Trainingsbereich ein militärischer Trainingsboden ist und das Objekt (5) eine Schusswaffe ist, die von einem Übenden gehandhabt wird, wobei die Kamera (6) an der, in Richtung des Ziels weisenden Waffe (5), angebracht ist.

10. System nach den vorhergehenden Ansprüchen, wobei es den am Auslöser (5) der Schusswaffe angebrachten Triggersensor umfasst, der das Trigger-Pull-Moment erfasst und mit dem Rechnersystem verbunden ist, was folglich die Berechnung der Trajektorie ermöglicht und Informationen über Zieltreffern im Trainingsszenario bereitstellt.

11. Militärischer Trainingsbereich umfassend das System nach den Ansprüchen 1 bis 10.

## Revendications

1. Système de reconnaissance de la position et de l'orientation d'un objet (5) dans un champ de tir d'entraînement, qui consiste en :
- au moins deux champs de position (2), positionnés statiquement, de sources ponctuelles d'ondes électromagnétiques de longueur d'onde de bande B spécifique, chacun desdits champs de position (2) étant constitué d'au moins quatre sources ponctuelles (8) d'ondes électromagnétiques disposées à l'intérieur de chacun des champs de position (2) de manière non coplanaire, lesdits champs de position (2) ayant le même agencement de sources ponctuelles (8) d'ondes EM dans les directions x, y et z d'un système de coordonnées d'un champ de position local (2) ;
- des champs de position supplémentaires (9) placés dans les champs de position (2), un champ de position supplémentaire (9) appartenant à chaque champ de position (2) et chacun desdits champs de position supplémentaires (9) étant mis en oeuvre sous la forme d'une série de sources ponctuelles (10) d'ondes EM sur la même ligne dans les plans x et y du système de coordonnées du champ de position local (2), la ligne de sources ponctuelles (10) d'ondes EM dans chaque champ de position (2) étant positionnée selon un angle unique φ par rapport à la verticale dans les plans x et y du système de coordonnées local ;
- au moins une caméra (6), qui est montée sur un objet mobile (5) et qui peut détecter des ondes électromagnétiques dans la longueur d'onde de la bande B,
- au moins un système informatique, qui est connecté à la caméra (6) et inclut
- un module logiciel du système de coordonnées du champ de tir d'entraînement avec des données préentrées sur les dimensions du terrain d'entraînement, les positions des champs de position (2), les positions des sources ponctuelles (8) des ondes EM dans les champs de position (2), les positions des champs de position supplémentaires (9) et les positions des sources ponctuelles supplémentaires (10) d'ondes EM dans chaque champ de position supplémentaire (9) ;
- un module logiciel pour calculer la position et l'orientation d'un objet (5) dans le système de coordonnées du champ de tir d'entraînement, sur la base des distances et des angles entre les sources ponctuelles (8, 10) d'ondes EM dans les champs de position (2) et des champs de position supplémentaires (9) à l'aide de l'image bidimensionnelle capturée par la caméra (6) et des données préentrées sur la position des champs de position (2), des champs de position supplémentaires (9) et des positions des sources ponctuelles (8, 10) d'ondes EM dans tous les champs de position (2) et champs de position supplémentaires (9).

2. Système selon la revendication 1, dans lequel le champ de tir d'entraînement est bordé sur un côté, de préférence sur plusieurs côtés, et encore plus préférentiellement sur tous les côtés avec un ou plusieurs écrans (1), sur lesquels des scénarios d'entraînement sont affichés de manière soit statique, soit dynamique, affichant des cibles d'arrière-plan et cibles possibles, tandis que les champs de position (2) et les champs de position (9) supplémentaires sont placés sur les bords des écrans (1) et les champs de position (2) à l'intérieur du champ de tir d'entraînement sont placés à des distances spécifiques l'un de l'autre de sorte que la caméra (6) détecte toujours au moins un champ de position (2) de sources ponctuelles (8) d'ondes EM ou, dans le cas de plusieurs champs de position (2), la caméra (6) détecte les sources ponctuelles (8) d'au moins un champ de position (2) et les sources ponctuelles (10) d'ondes EM d'au moins un champ de position supplémentaire (9).

3. Système selon les revendications précédentes, dans lequel les ondes EM de longueur d'onde de la bande B sont dans le spectre IR et les sources ponctuelles (8, 10) des ondes EM sont des sources ponctuelles de rayonnement infrarouge (IR), de préférence une diode IR.

4. Système selon les revendications précédentes, dans lequel le système informatique permet en outre de démarrer et de choisir entre différents modules logiciels d'arme contenant des données sur une arme individuelle, telle que la portée, les informations balistiques et le nombre de balles dans un chargeur.

5. Système selon les revendications précédentes, dans lequel le système informatique permet en outre de démarrer et de choisir entre différents modules logiciels de scénario d'entraînement contenant des informations sur l'environnement, le terrain, le nombre, la forme, la distance et d'autres informations sur des cibles et d'autres objets dans le scénario d'entraînement, ainsi que le déroulement d'un scénario d'entraînement, qui est affiché sur des écrans (1) et permet une interaction entre le scénario d'entraînement et l'activité de l'objet (5).

6. Système selon les revendications précédentes, le système comprenant une interface utilisateur connectée à un système informatique et permettant une interaction avec le système informatique, ce qui signifie le chargement de différents modules, la capacité de l'instructeur à modifier le déroulement du scénario d'entraînement pendant l'entraînement lui-même ; et un affichage pour instructeur connecté au système informatique, qui permet à l'instructeur de surveiller simultanément ou ultérieurement l'entraînement ou de modifier le déroulement du scénario d'entraînement.

7. Système selon les revendications précédentes, dans lequel le système informatique comprend en outre un module de mémoire qui enregistre et stocke des informations au cours d'une session d'entraînement spécifique, à savoir le scénario d'entraînement, le mouvement et l'activité d'un individu en formation pour un revisionnage et/ou une analyse.

8. Système selon les revendications précédentes, dans lequel le système informatique consiste en une unité logicielle de traitement (6a) et un ordinateur central (7), l'unité logicielle de traitement (6a) étant connectée à la caméra (6) et à l'ordinateur central (7) et étant de préférence montée à côté de la caméra (6) sur l'objet (5), l'unité logicielle de traitement (6a) exécutant le module logiciel pour calculer la position et l'orientation de l'objet (5) dans le système de coordonnées du champ de tir d'entraînement, l'ordinateur central exécutant d'autres modules logiciels et fonctionnalités du système informatique.

9. Système selon les revendications précédentes, dans lequel le champ de tir d'entraînement est un terrain de tir d'entraînement militaire et l'objet (5) est une arme à feu, qui est manipulée par un individu en formation, la caméra (6) étant montée sur le canon de l'arme à feu (5) faisant face à la direction dee l'objectif.

10. Système selon les revendications précédentes, comprenant le capteur de déclenchement monté sur la gâchette de l'arme à feu (5) qui détecte le moment de déclenchement et est connecté au système informatique, ce qui permet par conséquent de calculer la trajectoire et fournit des informations sur les cibles atteintes dans le scénario d'entraînement.

11. Champ de tir d'entraînement militaire comprenant le système selon les revendications 1 à 10.
